**Europäisches Patentamt**

**European Patent Office**

**Office européen des brevets**

(11) Numéro de publication : **0 330 631 B1**

(12) **FASCICULE DE BREVET EUROPEEN**

(45) Date de publication du fascicule du brevet :
30.12.92 Bulletin 92/53

(51) Int. Cl.⁵ : **F16L 37/00**

(21) Numéro de dépôt : **89830070.2**

(22) Date de dépôt : **21.02.89**

(54) **Raccord tournant pour la connexion entre un tuyau flexible et un corps de douche à main.**

(30) Priorité : **26.02.88 IT 512188**

(43) Date de publication de la demande :
**30.08.89 Bulletin 89/35**

(45) Mention de la délivrance du brevet :
**30.12.92 Bulletin 92/53**

(84) Etats contractants désignés :
**DE ES FR GB IT**

(56) Documents cités :
**DE-A- 2 753 857**
**US-A- 1 684 516**
**US-A- 4 128 264**

(73) Titulaire : **SOL S.p.A.**
**Via Montesuello 234**
**I-25065 Lumezzane S.S. (Brescia) (IT)**

(72) Inventeur : **Ottelli, Giordano**
**Via Mazzini 99/B**
**I-25065 Lumezzane S.S. (Brescia) (IT)**

(74) Mandataire : **Manzoni, Alessandro**
**MANZONI & MANZONI - UFFICIO**
**INTERNAZIONALE BREVETTI P.le Arnaldo n.**
**2**
**I-25121 Brescia (IT)**

Jouve, 18, rue Saint-Denis, 75001 PARIS

## Description

Cette invention concerne un raccord tournant pour connecter un tuyau flexible à un corps de douche à main.

A présent, la connexion entre le corps d'une douche à main et le tuyau flexible pour l'alimentation de l'eau est obtenu par un raccord fileté rigide ou solidaire au corps de la douche et interactif avec une bague filetée placée à l'extrémité du tuyau flexible.

En tout cas on sait bien qu'une telle forme de jonction présente l'inconvénient de provoquer bien souvent le tortillement du tuyau flexible et donc l'usure prématurée ou la rupture du tuyau à la suite de la manipulation de la douche pour son emploi.

D'autre part, à partir du document US-A-4 128 264 on connaît une unité de raccord formé d'un premier élément et d'un deuxième élément couplés axialement. Le premier élément, en forme d'embout, présente une partie extérieure dont une extrémité est filetée et une ouverture axiale passante avec une section centrale agrandie formant un épaulement. Le deuxième élément est formé d'un tuyau en matière plastique avec une partie de blocage rétractable/extensible qui entre dans l'ouverture du premier élément et s'accroche par encliquetage à l'épaulement dans cette ouverture.

Les deux éléments ainsi assemblés peuvent tourner l'un par rapport à l'autre pour visser l'embout dans l'ouverture à laquelle il doit être branché.

Pour séparer le tuyau de l'embout en cas d'entretien, il semble nécessaire de détruire ladite partie de blocage.

Par contre, cette invention vise à éliminer l'inconvénient mentionné ci-dessus par l'adoption d'un raccord fileté appliqué par rotation, directement ou indirectement, au corps de la douche à fin que la manipulation de ce dernier ne comporte pas des contraintes de torsion du tuyau flexible.

Pourtant, l'invention concerne un raccord tournant entre un tuyau flexible et un corps de douche à main dans lequel

- le raccord comprend un élément de raccord à appliquer au corps de la douche avec une extrémité filetée à l'extérieur,
- ledit corps présente un trou dans lequel se trouve un épaulement ou butée d'arrêt, et
- le tuyau flexible est branché à cette extrémité filetée de l'élément de raccord,

l'élément de raccord présentant à l'autre extrémité des ailettes flexibles avec des dents radiales d'accrochage destinés à s'insérer dans ledit corps et à s'encliqueter sur l'épaulement ou butée mentionné ci-dessus, et entre ces ailettes et l'extrémité filetée se trouvant une garniture assurant l'étanchéité du raccord tournant.

Contrairement à ce qui établi dans le document US-A-4 128 264, dans l'exécution proposée ici, c'est le raccord qui tourne par rapport à la douchette à laquelle il est branché, tandis que le tuyau flexible reste bloqué et il tourne au même temps que le raccord. Le tuyau flexible pourra également être démonté à tout moment pour les opérations d'entretien sans devoir démonter le raccord de la douchette.

Dans une réalisation l'épaulement ou butée d'arrêt est constitué par une rainure annulaire logée dans le trou du corps de la douche, les dents des ailettes flexibles de l'élément de raccord s'accrochent par encliquetage dans cette rainure et la garniture d'étanchéité agit sur la surface intérieure du trou dudit corps.

Dans une autre réalisation l'épaulement ou butée d'arrêt est définie par l'extrémité intérieure d'une bague rapportée vissée sur une zone filetée correspondante logée dans ledit corps les dents des ailettes flexibles de l'élément de raccord s'accrochent par encliquetage derrière l'épaulement ou butée d'arrêt ainsi défini, et la garniture d'étanchéité agit sur la surface intérieure de cette bague rapportée.

Dans une variante, le raccord comprend deux composants complémentaires. Un premier composant présente une extrémité filetée qui se visse dans un filetage correspondant du corps de la douche et une autre extrémité avec des ailettes flexibles s'étendant à l'extérieur du corps de la douche et se terminant par des dents radiales. Un deuxième composant est un manchon monté tournant sur lesdites ailettes et présentant un filetage extérieur auquel le tuyau flexible est connecté. Une garniture d'étanchéité se trouve entre les deux composants.

Plus de détails resulteront en tout cas évidents de la description suivante faite avec référence au dessin ci-joint dans lequel:

la Fig. 1 montre une vue en coupe partielle d'un exemple de douche avec raccord fileté tournant pour sa jonction au tuyau flexible;

la Fig. 2 montre une vue en coupe d'une première forme de réalisation et de montage du raccord tournant;

la Fig. 3 montre une deuxième forme de montage du raccord tournant; et

la Fig. 4 montre une autre forme de réalisation et de montage du raccord tournant.

Dans le dessin ci-joint par 10 est globalement indiqué un corps de douche à main à connecter à un tuyau flexible 11 pour l'alimentation de l'eau au moyen d'un raccord tournant 12.

Ce raccord est composé d'au moins un élément muni, d'un côté, des ailettes flexibles 13 avec dents radiaux d'accrochage 14 tournés au dehors et, du côté opposé, une portion à filet extérieure 15.

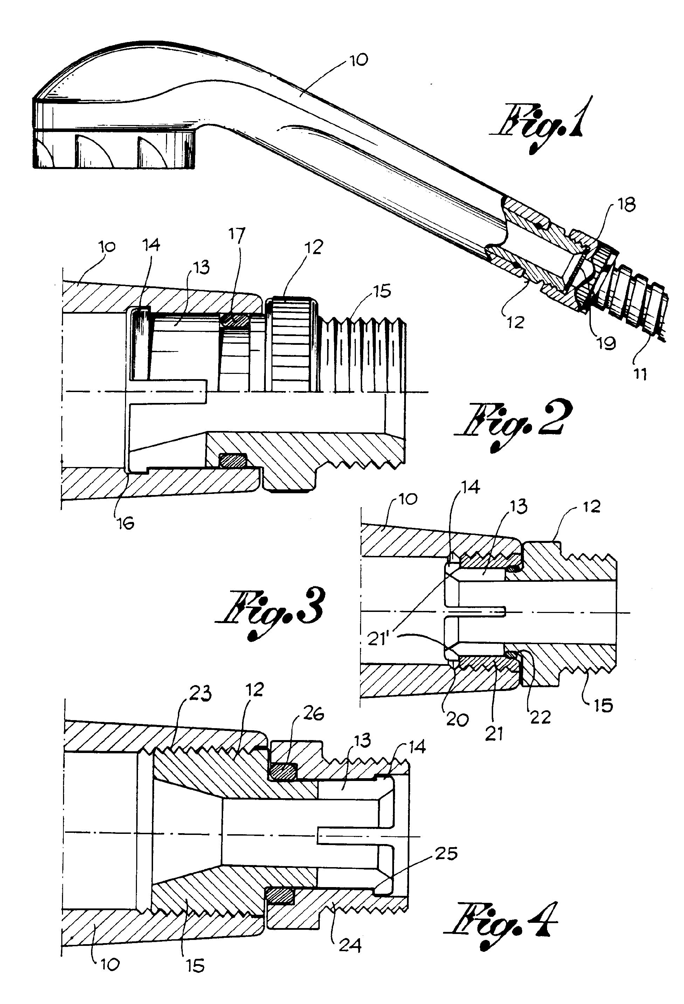

Dans la forme de réalisation selon la Figure 2, à l'intérieur du corps de douche 10 il y a une rainure annulaire 16 pour le logement à encliquetage des dents d'accrochage 14 des ailettes flexibles 13 du raccord 12 avec interposition d'une garniture d'étanchéité 17 entre le raccord 12 et le corps de douche. De cette façon, le raccord 12 est axialement fixé au corps de
douche 10 mais d'une manière qui permet la rotation
du raccord lui-même autour de son axe et par rapport
au corps sur lequel il est arrêté. D'autre part, sa portion fileté 15 est libre et partant on y peut connecter
le tuyau flexible 11 au moyen d'une bague de blocage
18 et on y interposant éventuellement un filtre 19
comme montre la Figure 1.

Dans une autre forme de réalisation, représentée
en Figure 3, le corps de douche 10 présente un taraudage 20 pour y visser une bague 21 dont l'extrémité
tournée vers l'intérieur du corps de douche Forme un
épaulement ou détallonnage 21'.

En ce cas le raccord 12 est axialement accouplé
au corps de douche 10 par l'encliquetage des dents
d'accrochage 14 des ailettes flexibles 13 sur l'épaulement ou détallonnage 21' formé par la bague 21.
Dans ce cas aussi, entre le raccord 12 et le corps 10
il y a une garniture d'étanchéité 22, tandis que la jonction est obtenue de telle façon qu'elle permet la rotation du raccord 12 dont la portion filetée 15 est raccordée au tuyau flexible comme montre la Figure 1.

Enfin, dans la forme de réalisation en Figure 4, le
corps de douche présente un taraudage 23 pour y visser la partie filetée 15 du raccord 12. De cette façon
le raccord 12 est bloqué dans le corps 10 et ses ailettes flexibles 13 avec les dents d'accrochage 14 sont
en saillie du corps 10. En ce cas, le raccord 12 sert
de support pour un manchon auxiliaire 24 avec filet
extérieure et présentant un épaulement ou détallonnage 25 à l'intérieur. Ce manchon 24 est encliqueté
sur le raccord 12 avec l'interposition d'une garniture
26, de façon à engager les dents d'accrochage 14 des
ailettes flexibles 13 avec l'épaulement ou détallonnage 25 du manchon 24. Cependant, ce manchon est
toujours libre de tourner sur le raccord et consente
donc la connexion du tuyau flexible qui ne sera pas
sujet au tortillement, comme dans les cas des réalisations montrées dans les Figures 2 et 3 et dans lesquelles c'est le raccord lui-même qui tourne.

## Revendications

1. Raccord tournant entre un tuyau flexible et un
corps de douche à main dans lequel
   - le raccord comprend un élément de raccord
   (12) à appliquer au corps de la douche (10)
   avec une extrémité filetée à l'extérieur (15),
   - ledit corps présente un trou dans lequel se
   trouve un épaulement ou butée d'arrêt
   (16,21'), et
   - le tuyau flexible (11) est branché à cette extrémité filetée (15) de l'élément de raccord,
   l'élément de raccord (12) présentant à l'autre extrémité des ailettes flexibles (13) avec des dents
   radiales d'accrochage (14) destinés à s'insérer dans ledit corps et à s'encliqueter sur l'épaulement ou butée d'arrêt (16,21'), et entre ces ailettes et l'extrémité filetée se trouvant une garniture
(17,22) assurant l'étanchéité du raccord tournant.

2. Raccord selon la revendication 1, caractérisé en
ce que l'épaulement ou butée d'arrêt (16) est
constitué par une rainure annulaire logée dans le
trou du corps de la douche, les dents (14) des ailettes flexibles (13) de l'élément de raccord d'accrochent par encliquetage dans cette rainure et la
garniture d'étanchéité (17) agit sur la surface intérieure du trou dudit corps.

3. Raccord selon la revendication 1, caractérisé en
ce que l'épaulement ou butée d'arrêt (21') est défini par l'extrémité intérieure d'une bague rapportée (21) vissée sur une zone filetée correspondant logée dans ledit corps, les dents (14) des ailettes flexibles (13) de l'élément de raccord s'accrochent par encliquetage derrière l'épaulement
ou butée d'arrêt, et la garniture (22) d'étanchéité
agit sur la surface intérieure de cette bague rapportée.

4. Raccord tournant entre un tuyau flexible et un
corps de douche à main dans lequel
   - le raccord comprend deux éléments, chacun
   comportant une extrémité filetée à l'extérieur,
   - le corps de la douche présente un trou filetée, et
   - le tuyau flexible est branché à l'une des extrémités filetées du raccord,
   lesdits élément du raccord étant des composants
   complémentaires, dont le premier composant
   (12) a une extrémité filetée (15) qui se visse dans
   le trou filetée dudit corps alors que l'autre extrémité comporte des ailettes flexibles (13) s'étendant à l'extérieur dudit corps et se terminant par
   des dents radiales (14), et dont le deuxième
   composant (24) est un manchon monté tournant
   sur lesdites ailettes et présentant un filetage extérieur auquel le tuyau flexible est connecté, une
   garniture d'étanchéité (26) étant interposée entre
   les deux composants.

## Patentansprüche

1. Drehendes Anschlussstueck zwischen einem
Schlauch und einem Duschehaupteteil, in dem
   - das Anschlussstueck ein Verbindungselement (12) enthaelt, das mit einem aussengewindenden Schluss (15) dem Duschehaupteil
   (10) zu befestigen ist.
   - Das obengenannte Teile hat ein Loch, in
   dem ein Stopschulter oder ein Stopknopf (16, 21') ist, und

- der Schlauch (11) ist mit diesem gewindendem Schluss (15) verbunden,

das Verbindungselement (12) hat an dem anederen Schluss einige flexiblen Fluegel (13) mit Kupplungsradialzaehne (14), die sich in dem obengenannten Haupteil einfuegen und sich dem Stopschulter oder Stopknopf (16, 21') festklemmen, und zwischen diesen Fluegeln und gewindendem Scluss gibt es einen Dichtungsring (17,22), der die Wasserdichtigkeit des drehenden Anschlussstuecks sichert;

2. Anschlussstueck nach dem Anspruch 1) vom Stopschulter oder Stopknopf (16) gekennzeichnet, er ist von einer in dem Loch des Hauptduscheteils gesetzten ringfoermigen Nut gemacht, die Zaehne (14) der flexiblen Fluegel (13) des Verbindungselements klemmen sich durch einen Klinkwerk in dieser Nut fest und der Dichtungsring (17) wirkt auf der Innenflaeche des obengenannten Hauptteils.

3. Ansclussstueck nach dem Anspruch 1) in dem der Stopschulter oder Stopknopf (21') durch den Innenschluss eines verbindeten Rings (21) gekennzeichnet ist, der in dem obengenannten Hauptteil einem entsprechenden gewindenden Teil angeschraubt ist, die Zaehne 814) der flexiblen Fluegel 813) des Verbindungselementenklemmen sich durch einen Klinkwerk hinter dem Stopschulter oder Stopknopf fest, und der Dichtungsring (22) wirkt auf der Innenflaeche des verbindeten Rings.

4. Drehendes Anschlussstueck zwischen einem Schlauch und dem Handduschehaupteil, in dem

- das Anchlussstueck zwei Elemente enthaelt, jedes von denen einen aussengewindenden Schluss hat,

- das Duschehauptteil hat ein gewindendes Loch, und

- der Schlauch ist mit der gewindenden Schluessen des Anschlussstuecks verbunden,

die obengenannten Verbindungselemente sind zusaetziche Teile, das erste Teil (12) hat einen gewindenden Schluss (15), der im gewindenden Loch des obengenannten Hauptteils angeschraubt wird, der andere Schluss hat einige flexiblen Fluegel 813) , die sich aussen von dem genannten Hauptteil hinziehen und die mit Radialzaehnen (14) enden, das zweite Teil 824) ist eine Muffe auf einige Fluegel montiert, die aeusserlich gescnitten ist, das gewindende Teil ist mit dem Schlauch verbunden und zwischen dem gewindenden Teil und dem Schlauch ist ein Dichtungsring gelegt.

## Claims

1. Turning pipe-fitting between a flexible pipe and a hand-shower body wherein

- the pipe-fitting includes a pipe-fitting element (12) to be applied to the shower body (10) with an externally-threaded end (15);

- said body is provided with a hole into which a shoulder or stopping edge (16,21) is situated, and

the flexible pipe (11) is engaged with said threaded end (15) of the pipe-fitting element (12) being provided with flexible fins (13) at the other end with hooking radial cogs (14) to be inserted into the said body and ratcheted on the shoulder or stopping edge, (16,21') and a gasket (17,22') being situated between said flexible fins and the threaded end to ensure the pipe-fitting impermeability.

2. Pipe-fitting as claimed in claim 1, characterized in that the shoulder or stopping edge (16) is formed by an annular groove housed in the hand-shower body hole, the flexible fins (13) cogs (14) of the pip-fitting element being hooked by ratcheting in said groove, while the gasket (17) works on the hole inner surface of the said body.

3. Pipe-fitting as claimed in claim 1, characterized in that the shoulder or stopping edge (21') is settled by the inner end of a ring inserted (21) and screwed on a corresponding threaded zone in the said body, the cogs (14) of the flexible fins (13) of the pipe-fitting element being hooked by ratcheting on the back of the shoulder or stopping edge, and the gasket (22) acting on the inner surface of this inserted ring.

4. Turning pipe-fitting between a flexible pipe and a hand-shower body wherein

- the pipe-fitting includes two elements, each one provided with an externally threaded end

- the hand-shower body is provided with a threaded hole, and

- the flexible pipe is engaged with one of the threaded ends of the pipe-fitting,

the said pipe-fitting elements being subsidiary component parts, whose first component part (12) is provided with a threaded end (15) screwing in the threaded hole of the said body, while the other end is provided with flexible fins (13) projecting outside the said body and ending with radial cogs (14), and whose second component part (24) is a rotating sleeve set on the said fins and presenting an external thread onto which the flexible pipe is connected, a gasket (26) being inserted between the two component parts.

Fig.1

Fig.2

Fig.3

Fig.4